# EUROPEAN PATENT SPECIFICATION

(11) **EP 3 400 125 B1**
(45) Date of publication and mention of the grant of the patent: **20.12.2023**
(21) Application number: 17796793.2
(22) Date of filing: 10.05.2017
(51) Int. Cl.: B29C 64/165, B29C 64/25, B33Y 10/00, B33Y 30/00, B22F 10/00, B22F 12/00, B29C 64/153, B29C 64/255, B29C 64/35, B29C 64/357, B33Y 40/00, B08B 5/04, B22F 10/68, B22F 10/73, B33Y 40/10

(54) **APPARATUS AND METHOD FOR UNPACKING 3D PRINTED OBJECTS**
VORRICHTUNG UND VERFAHREN ZUM AUSPACKEN VON 3D-GEDRUCKTEN OBJEKTEN
DISPOSITIF ET PROCÉDÉ POUR DÉBALLER D'OBJETS IMPRIMÉS EN 3D

(30) Priority: 12.05.2016 GB 201608347
(43) Date of publication of application: 14.11.2018
(73) Proprietor: Hewlett-Packard Development Company, L.P., Spring TX 77389 (US)
(72) Inventor: CHANCLON, Ismael, 08174 Sant Cugat del Valles (ES); ALONSO, Xavier, 08174 Sant Cugat del Valles (ES); MORROS, Marc, 08174 Sant Cugat del Valles (ES); NICOLAU, Marc, 08174 Sant Cugat del Valles (ES); JIMENEZ, Manuel, 08174 Sant Cugat del Valles (ES)
(74) Representative: HGF
(86) International application number: PCT/US2017/032016
(87) International publication number: WO 2017/197023

(56) References cited:
- WO-A1-2015/196149
- WO-A1-2016/026706
- WO-A2-03/026876
- WO-A2-03/026876
- DE-A1-102007 018 601
- GB-A- 2 526 341
- US-A- 3 811 250
- US-B2- 7 037 382

## Description

### BACKGROUND

Additive manufacturing systems generate three-dimensional objects on a layer-by-layer basis. In some 3D printing techniques, build material, for example a powder, may be selectively fused to create the 3D objects, and non-fused build material may be left over after a build process.

After a build process completes, a built object is removed from the non-fused material. Due to the selective nature of the fusing of the build material, quantities of non-fused material can be left behind after the additive manufacturing process.
WO 03/02876 describes a 3D printer system that uses inkjet-type printheads to rapidly prototype, or print, a 3D model. A power feeder for a build area includes a vacuum system that can be used to clean up excess powder from the build area.
DE 10 2007 018601 describes an apparatus for the production of three-dimensional objects, the apparatus including a handling zone including a suction device.
GB2526341 describes a flow cabinet system for cleaning at least one object, possibly an object produced by 3D printing, comprising a cabinet having walls enclosing a volume. Tubing for the supply of compressed gas as well as a plurality of handheld cleaning tools within the volume for removing, by means of the supplied compressed gas, powder from the at least one object are included.

Claim 1 defines the apparatus according to the invention and claim 13 defines the method according to the invention.

### BRIEF DESCRIPTION OF THE DRAWINGS

Examples are further described hereinafter with reference to the accompanying drawings, in which:
Fig. 1A schematically illustrates an example of a three dimensional (3D) printing system;
Fig. 1B schematically illustrates the material management station of the example of Figure 1A;
Fig. 1C schematically illustrates a working area of the material management station of the example of Figure 1B;
Fig. 2A schematically an internal circuit diagram of one example of a material management station;
Fig. 2B is a table schematically illustrating valve setting information for the material management station internal circuit of Figure 2A; and
Fig. 2C schematically illustrates a build material trap geometry used in tanks of the material management station internal circuit of Figure 2A.
Figure 3 shows a process flow diagram of an example method not according to the claimed invention of unpacking objects built in an additive manufacturing process.

### DETAILED DESCRIPTION

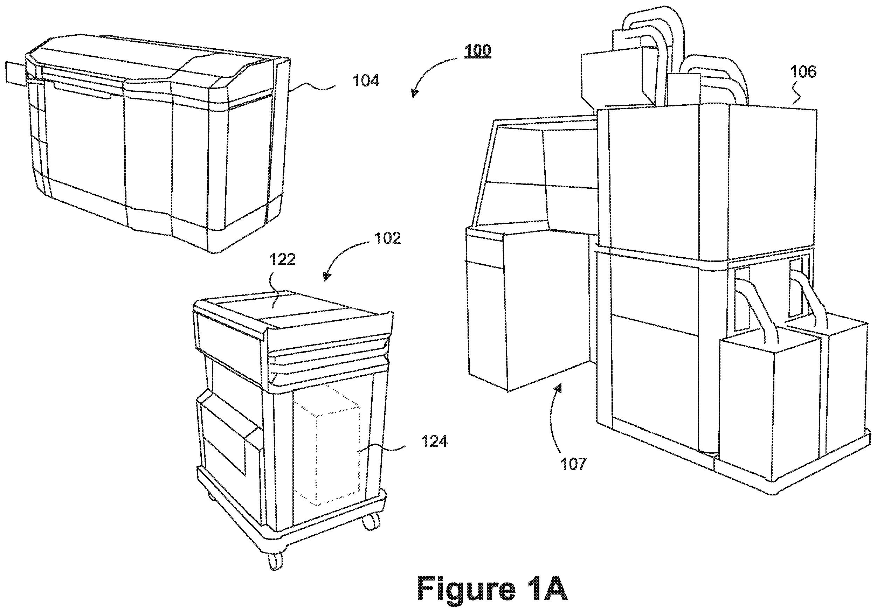

As shown in Figure 1A, the three dimensional (3D) printing system 100 (or additive manufacturing system) according to one example comprises: a trolley 102, a 3D printer 104 and a material management station 106. The material management station 106 manages build material.

The trolley 102 is arranged to slot into a docking position in the printer 104 to allow the printer 104 to generate a 3D object within the trolley. The trolley is also arranged to also slot (at a different time) into a docking position 107 in the material management station 106. The trolley 102 may be docked in the material management station 106 prior to a 3D printing process to load the trolley with build material in preparation for a subsequent 3D printing process. The cleanup process at the material management station 106 includes according to the claimed invention the unpacking of any built parts (also referred to herein as 3D printed object) from the unfused build material by recovering the unfused build material from the trolley 102 from around the built parts and also the cleaning of the built parts.

The build material loaded into the trolley may include recycled or recovered build material from one or more previous printing processes, fresh build material or a portion of fresh and recycled build material. Some build materials may be non-recyclable and hence in this case no recovered build material will be used to load the trolley. The build material may be or include, for example, powdered metal materials, powdered composited materials, powder ceramic materials, powdered glass materials, powdered resin material, powdered polymer materials and the like. In some examples where the build material is a powder-based build material, the term powder-based materials is intended to encompass both dry and wet powder-based materials, particulate materials and granular materials. It should be understood that the examples described herein are not limited to powder-based materials, and may be used, with suitable modification if appropriate, with other suitable build materials. In other examples, the build material may be in the form of pellets, or any other suitable form of build material, for instance.

Returning to Figure 1A, the trolley 102 may also be docked in the docking position 107 in the material management station 106 (shown without the trolley 102 docked in Figure 1A) to clean up at least some components of the trolley 102 after it has been used in a 3D printing production process. The clean-up process may involve recovery and storage in the material management station 106 of unfused build material from the previous print job for subsequent reuse. During a 3D printing process a portion of the supplied build material may be fused to form the 3D object, whilst a remaining portion of the supplied build material may remain unfused and potentially recyclable, depending upon the type of build material used. Some processing of the unfused build material may be performed by the material management station 106 prior to storage for recycling, to reduce any agglomeration for example.

It will be understood that the material management station 106 may also include an access panel (not shown) to cover the docking position 107 when the trolley 102 is fully docked with the material management station 106 and when the trolley 102 is fully removed from the material management station 106.

One material management station 106 can be used to service one or more different 3D printers. A given 3D printer may interchangeably use one or more trolleys 102, for example, utilising different trolleys for different build materials. The material management station 106 can purge a trolley 102 of a given build material after a 3D printing production process, allowing it to be filled with a different build material for a subsequent 3D printing production run. Purging of the trolley 102 may also involve purging of the material management station 106 or alternatively, it may involve separation of different build materials in the material management station 106 to limit contamination of one build material type with another.

The trolley 102 in this example has a build platform 122 on which an object being manufactured is constructed. The trolley 102 also comprises a build material store 124 situated beneath a build platform 122 in this example, from which build material may be provided (for example, by a material depositor carriage of the 3D printer) to the build platform 122 for use in building the objects thereon in a 3D printing process. The build platform 122 may be arranged to have an actuation mechanism (not shown) allowing it, when it is docked in the printer 104 and during a 3D printing production process, to gradually move down, such as in a step-wise manner, towards the base of the trolley 102 as the printing of the 3D object progresses and as the build material store 124 within the trolley 102 becomes depleted. This provides progressively more distance between the base level of the build platform 122 and the print carriages (not shown) to accommodate the 3D object being manufactured. The size of an object being printed may increase progressively as it is built up layer-by-layer in the 3D printing process in this example.

The 3D printer 104 of this example can generate a 3D object by using a build material depositor carriage (not shown) to form layers of build material onto the build platform 122. Certain regions of each deposited layer are fused by the printer 104 to progressively form the object according to object-specifying data. The object-specifying data are based on a 3D shape of the object and may also provide object property data such as strength or roughness corresponding to the whole object or part(s) of the 3D object. In examples, the desired 3D object properties may also be supplied to the 3D printer 104 via a user interface, via a software driver or via predetermined object property data stored in a memory.

After a layer of the build material has been deposited on the build platform 122 by the printer 104, a page-wide array of thermal (or piezo) printheads on a carriage (not shown) of the 3D printer 104 can traverse the build platform 122 to selectively deposit a fusing agent in a pattern based on where particles of the build material are to fuse together. Once the fusing agent has been applied, the layer of build material may be exposed to fusing energy using one or more heating elements (not shown) of the 3D printer 104. The build material deposition, fusing agent and fusing energy application process may be repeated in successive layers until a complete 3D object has been generated. The material management station 106 may be used with any additive manufacturing technique and is not limited to printers using printheads on a carriage to deposit a fusing agent as in the example described above. For example, the material management station 106 may be used with a selective laser sintering additive manufacturing technique.

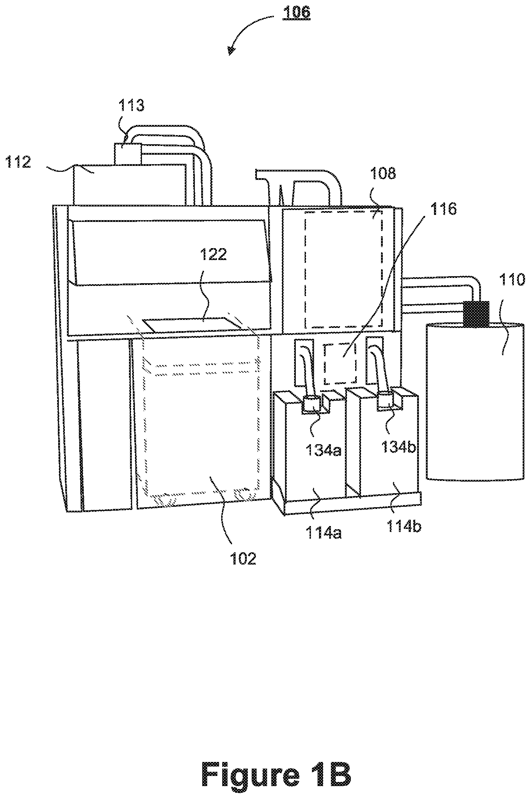

Figure 1B schematically illustrates the material management station 106 of the example of Figure 1A, with the trolley 102 of Figure 1A docked therein.

As shown in the example of Figure 1B, the material management station 106 has two interfaces for receiving two fresh build material supply tanks (or cartridges) 114a, 114b, which may be releasably insertable in the material management station 106. In this example, each fresh build material supply tank 114a, 114b has a capacity of between about thirty and fifty litres. In one example, the build material may be a powdered semi-crystalline thermoplastic material. The provision of two fresh build material supply tanks 114a, 114b allows "hot swapping" to be performed such that if a currently active container becomes empty or close to empty of build material when the trolley 102 is being filled with build material by the material management station 106 in preparation for an additive manufacturing process, a fresh build material supply source can be dynamically changed to the other of the two tanks. The material management system 106 may have one or more weight measurement device(s) to assess how much fresh build material is present at a given time in one or more of the fresh build material supply tanks 114a, 114b. The fresh build material from the tanks 114a, 114b, may be consumed, for example, when loading the trolley 102 with build material prior to the trolley 102 being installed in the printer 104 for a 3D printing production run.

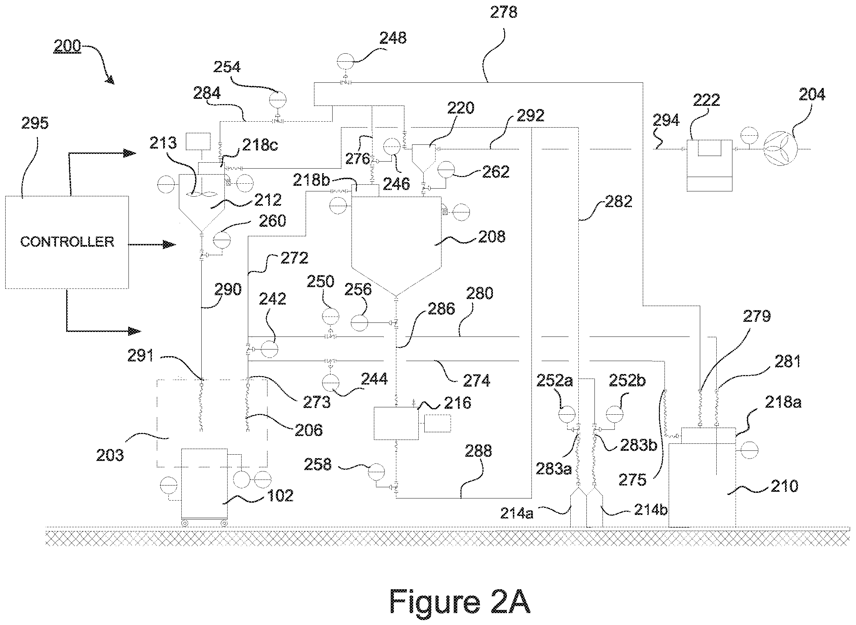

Build material is moved around within the material management station 106 in this example using a vacuum system (described below with reference to Figure 2A), which promotes cleanliness within the system and allows for recycling of at least a portion of build material between successive 3D printing jobs, where the type of build material selected for use is recyclable. References to a vacuum system in this specification include a vacuum that is partial vacuum or a pressure that is reduced, for example, relative to atmospheric pressure. The vacuum may correspond to "negative pressure", which can be used to denote pressures below atmospheric pressure in a circuit surrounded by atmospheric pressure.

A total trolley-use time for printing of a 3D object before the trolley 102 can be reused may depend upon both a printing time of the printer 104 when the trolley 102 is in the printer 104 and a cooling time of the contents of the build volume of the trolley 102. It will be understood that the trolley 102 can be removed from the printer 104 after the printing operation, allowing the printer 104 to be re-used for a further printing operation using build material within a different trolley before the total trolley-use time has elapsed. The trolley 102 can be moved to the material management station 106 at the end of the printing time. The vacuum system can be used, in some examples, to promote more rapid cooling of the contents of the build volume following a 3D print production process than would otherwise occur without the vacuum system. Alternative examples to the vacuum system such as a compressed air system can create excess dust, potentially making the clean-up process more difficult.

The material management station 106 in this example has a recovered build material tank 108 (see Figure 1B), located internally, where build material recovered from the trolley 102 by the vacuum system is stored for subsequent reuse, if appropriate. Some build materials may be recyclable whilst others may be non-recyclable. In an initial 3D printing production cycle, 100% fresh build material may be used. However, on second and subsequent printing cycles, depending upon build material characteristics and user choice, the build material used for the print job may comprise a proportion of fresh build material (e.g. 20%) and a portion of recycled build material (e.g. 80%). Some users may elect to use mainly or exclusively fresh build material on second and subsequent printing cycles, for example, considering safeguarding a quality of the printed object. The internal recovered build material tank 108 may become full during a post-production clean-up process, although it may become full after two or more post-production clean up processes have been performed, but not before. Accordingly, an overflow tank in the form of an external overflow tank 110 can be provided as part of the material management station 106 to provide additional capacity for recovered build material for use once the internal recovered build material tank 108 is full or close to full capacity. Alternatively, the external overflow tank 110 can be a removable tank. In this example, one or more parts are provided as part of the material management station 106 to allow for output of or reception of build material to and/or from the external overflow tank 110. A sieve 116 or alternative build material refinement device may be provided for use together with the internal recovered build material tank 108 to make unfused build material recovered from a 3D printing production process for recycling more granular, that is, to reduce agglomeration (clumping).

The material management station 106 in this example has a mixing tank (or blending tank) 112 comprising a mixing blade (not shown) for mixing recycled build material from the internal recovered build material tank 108 with fresh build material from one of the fresh build material supply tanks 114a, 114b for supply to the trolley 102 when it is loaded prior to a printing production process. The mixing tank (or blending tank) 112, in this example, is provided on top of the material management station 106, above the location of the build platform 122 when the trolley 102 is docked therein. The mixing tank 112 is connected to a mixer build material trap 113 (described below with reference to Figure 2A) for input of build material into the mixing tank 112.

The fresh build material supply tanks 114a, 114b, the external overflow tank 110 and the main body of the material management station 106 may be constructed to fit together in a modular way, permitting a number of alternative geometrical configurations for the fully assembled material management station 106. In this way, the material management station 106 is adaptable to fit into different housing spaces in a manufacturing environment.

The fresh build material supply tanks 114a, 114b may be releasably connected to the main body of the material management station 106 via respective supply tank connectors 134a, 134b. These supply tank connectors 134a, 134b may incorporate a security system to reduce the likelihood of unsuitable build material being used in the 3D printing system. In one example, suitable fresh build material supply tanks 114a, 114b are provided with a secure memory chip, which can be read by a chip reader (not shown) or other processing circuitry on the main body of the material management station 106 to verify the authenticity of any replacement supply tank (cartridge) 114a, 114b that has been installed. In this example, the chip reader may be provided on the supply tank connectors 134a, 134b and upon attachment of the fresh build material supply tanks 114a, 114b to the respective connector 134a, 134b, an electrical connection may be formed. The processing circuitry in the material management station 106 may also be used to write a measured weight of build material determined to be in the respective fresh build material supply tank(s) 114a, 114b onto the secure memory chip of the tank to store and/or update that value. Thus, the amount of authorised build material remaining in the fresh build material supply tank(s) 114a, 114b at the end of a trolley loading process can be recorded. This allows the withdrawal of particulate build material from the fresh build material supply tanks 114a, 114b beyond the quantity with which it was filled by the manufacturer to be prevented. For example, in the case of a fresh build material supply tank 114a, 114b from which the tank manufacturer's authorised fresh build material has previously been completely withdrawn, this limits the withdrawal of further build material that may damage the printer or print quality, if the fresh build material supply tank were re-filled with alternative fresh build material.

The secure memory chip of the fresh build material supply tanks 114a, 114b can store a material type of the build material contained within the fresh build material supply tanks. In one example, the material type is the material (e.g. ceramic, glass, resin, etc.). In this way, the material management station 106 can determine the material type to be used by the material management station 106.

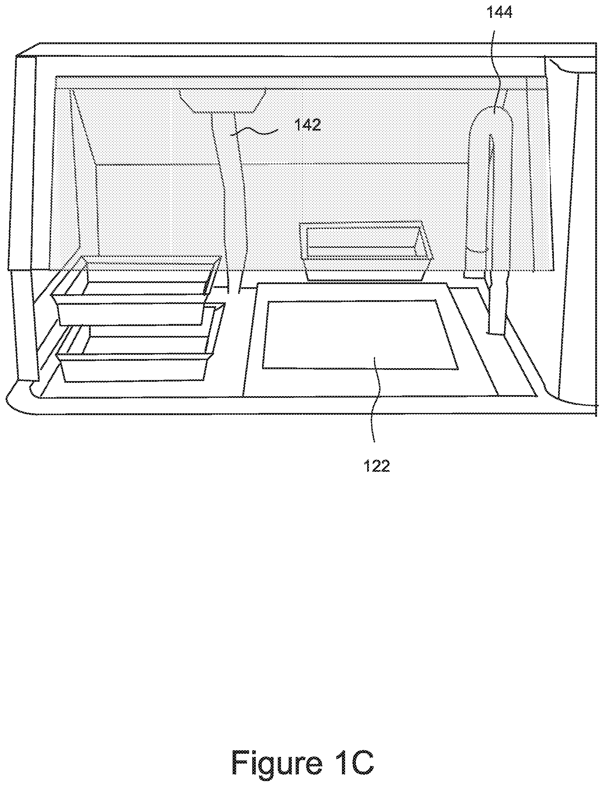

Figure 1C schematically illustrates a working area of the material management station 106 of the example of Figure 1B, arranged in an unpacking compartment defined at least partly by one or more parts of the housing of the material management station 106., The unpacking compartment is located above the docking port for the trolley 102 such that a build platform 122 of a trolley 102 is located at the bottom of the unpacking compartment. Between the unpacking compartment defined by one or more parts of the housing and the build platform of the trolley is the working area. The working area is according to the claimed invention at least partly open, for example at the front thereof, to allow a user to access the working area to operate a collection hose 144 to operate within the unpacking compartment to recover by suction non-fused build material from around built objects on the build platform. A build material loading hose 142 provides a path between the mixing tank 112 of Figure 1B and the build material store 124 of the trolley 102. The loading hose 142 is used for loading the trolley 102 with build material prior to the trolley 102 being used in the printer 104. Figure 1C also shows a recycling hose 144 for unpacking manufactured 3D objects, cleaning the build platform 122 of the trolley 102 and a surrounding working area within the material management station 106. In one example, the recycling hose 144 operates by suction provided via a pump 204 (see Figure 2A) and provides an enclosed path to the recovered build material tank 108 (see Figure 1B) for receiving and holding build material for re-use in a subsequent 3D printing process. The recycling hose 144 may, in one example, be operated manually by a user to recover recyclable build material from and/or to clean up a working area of the material management station 106.

In an alternative mode of operation (not shown), rather than retaining the built parts on non-fused build material on a build platform 122 of a trolley 102 for unpacking from the build platform, the built parts and non-fused build material may be transferred from the build platform 122 of the trolley 103 to a container (not shown) after the additive manufacturing process is completed. The built parts and non-fused build material may be retained in the container for cooling and unpacking, which may then be separated from the trolley 102. Use of the container allows the trolley 102 to be used for another print job while the built objects contained in the container 140 are cooled and unpacked independently from the trolley 102. In one mode of operation, the built parts and non-fused build material may be emptied together from the container, for example, after cooling, onto an unpacking platform (not shown) of the material management station 106 facing the unpacking compartment. In this mode of operation, a user to accesses the working area to operate a collection hose 144 within the unpacking compartment to recover by suction non-fused build material from around built objects on the unpacking platform.

Figure 1C schematically illustrates a working area of the material management station 106 of the example of Figure 1B arranged in an unpacking compartment defined at least partly by one or more parts of the housing of the material management station 106. The unpacking compartment is located above the docking port for the trolley 102 such that a build platform 122 of a trolley 102 may be located at the bottom of the unpacking compartment when the trolley 102 is docked at the material management station 106. Between the unpacking compartment defined by one or more parts of the housing and the build platform of the trolley is the working area. The working area is according to the claimed invention at least partly open, for example at the front thereof, by the unpacking compartment having an opening to allow a user to access the working area to operate a collection hose 144 within the unpacking compartment to recover by suction non-fused build material from around built objects on the build platform.

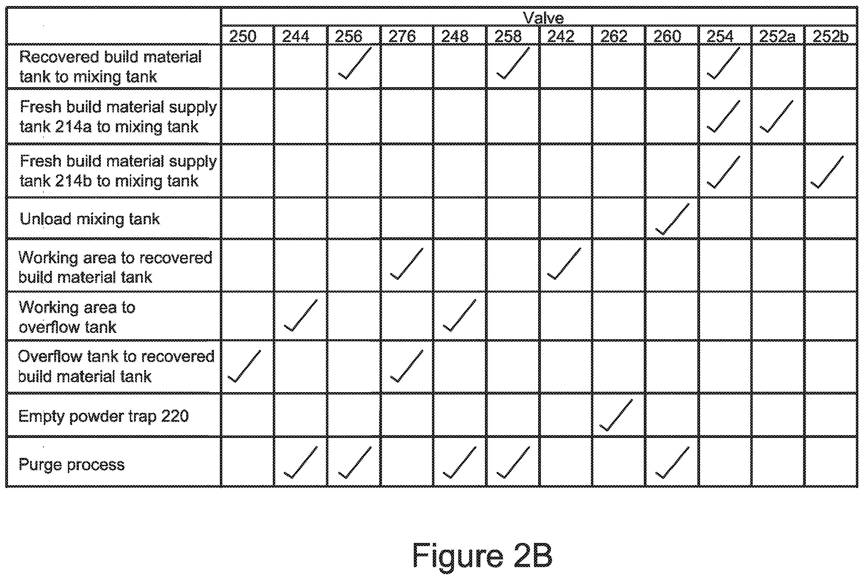

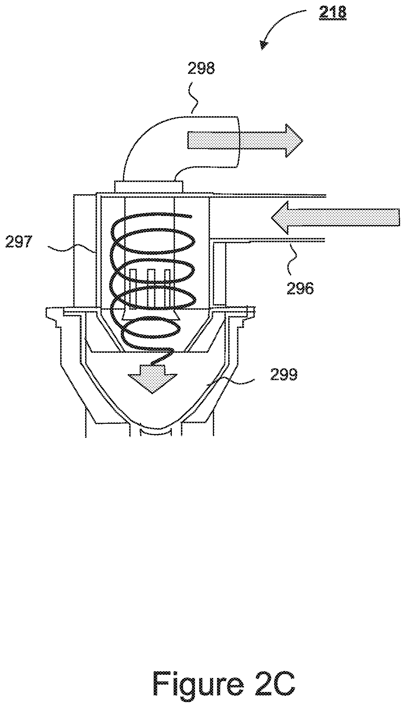

Figure 1C shows the build platform 122 of the trolley 102 and a build material loading hose 142, which provides a path between the mixing tank 112 of Figure 1B and the build material store 124 of the trolley 102 for loading the trolley prior to a 3D printing production run. Figure 1C also shows an example collection hose 144 for unpacking manufactured 3D objects, cleaning them, cleaning the build platform 122 of the trolley 102 and also a surrounding working area within the material management station 106. In one example, the collection hose 144 operates by suction provided via the pump 204 (see Figure 2) and provides an enclosed path to a tank for receiving and holding unfused build material for recycling and re-use in a subsequent 3D printing process. The collection hose 144 may be operable manually by a user to, in one activity at one station, perform the following functions: recover unfused build material from around the built parts, clean the built parts, clean the build platform or unpacking platform, clean up a working area of the material management station 106, and convey the recovered unfused build material to a tank, for example either the internal recovered build material tank 108 or the external overflow tank 110, for recycling. Figure 1C further shows trays 150a, 150b and 150c inside the working area. The trays may be used during the unpack process as areas to place the cleaned 3D printed objects, or cleaning and finishing tools (not shown) for use with the 3D printed objects.

Specifically, the collection hose 144 may be user-operated. Unpacking of the 3D printed objects involves the removal of the non-fused build material from around the build 3D printed objects, for example by use of suction, thus once the removal of the non-fused build material is complete from around any 3D printed object, the 3D printed object may be removed from the build platform 122 in a 'clean' state. Where there are multiple 3D printed objects, the 3D printed objects may be cleaned and removed one by one, or some or all of the 3D printed objections will be cleaned and subsequently collectively removed. One or more built part cleaning tools (not shown) may be provided to attach to the collection hose positioned proximate a suction opening of the hose. The built part cleaning tools may be used in conjunction with the operation of the collection hose 144 to clean the built parts, for example of unfused build material.

To facilitate user operation of the collection hose 144, the working area of the material management station 106, is at least partially open, allowing for example a user's hands and arms to enter the working to operate the hose.

In order to retain building material within the working area of the material management station 106, an airflow through the work area is created by an airflow pump (not shown). This is used to create a laminar flow across the working area from air outside the work area towards the work area. This may limit building material leaving the working area when the working area is at least partially open. Retaining of the build material ensures more build material can be collected and potentially recycled as well as ensuring the environment outside the material management station remains clean.

The collection hose therefore provides two functions at once. Firstly the collection hose facilitates the cleaning of the 3D printed objects by removed the un-fused build material. Secondly, the collection hose allows the non-fused build material to be automatically delivered to one or more of recovered build material or overflow tanks.

According to the claimed invention, an apparatus is provided for unpacking objects built using build material in an additive manufacturing process, the apparatus comprising: an unpacking compartment; a collection hose to operate within the unpacking compartment to recover by suction non-fused build material from around built objects; and a recovered build material tank coupled to the collection hose to receive non-fused build material recovered by the collection hose; the apparatus to provision recovered non-fused build material from the recovered build material tank for an additive manufacturing process.

In an example, the apparatus comprises an overflow tank coupleable to the collection hose to receive non-fused build material recovered by the collection hose.

In an example, the apparatus comprises switching valves to selectively enable fluid communication from the collection hose to the recovered build material tank and to the overflow tank.

In an example, the apparatus comprises a conduit to couple the collection hose to the recovered build material tank.

In an example, the apparatus comprises a suction pump to create suction in the collection hose.

According to the claimed invention, the apparatus comprises a housing defining the unpacking compartment to be at least partially open to permit user access to operate the collection hose.

According to the claimed invention, the apparatus comprises a dust filter and a compartment airflow pump to create a laminar airflow through the unpacking compartment and the dust filter to contain powder in the apparatus.

In an example, the apparatus comprises one or more built part cleaning tools to attach to the collection hose positioned proximate a suction opening of the hose.

In an example, the apparatus comprises a trolley dock to receive a trolley used in an additive manufacturing process and comprising a build platform on which portions of build material are fused in the additive manufacturing process, the trolley dock being to locate the build platform facing the unpacking compartment in use.

In an example, the collection hose is to operate within the unpacking compartment to recover by suction non-fused build material from around built objects on the build platform.

In an example, the apparatus comprises an unpacking platform facing the unpacking compartment in use to receive built objects and non-fused build material from a container, wherein the collection hose is to operate within the unpacking compartment to recover by suction non-fused build material from around built objects deposited on the unpacking platform from the container.

In an example, the apparatus is provided as a material management station separate from a 3D printer to perform the additive manufacturing process.

In an example, the apparatus comprises a conduit to provide recycled non-fused build material from the recovered build material tank to a trolley used in an additive manufacturing process for provision to a build platform supported by the trolley.

In an example not according to the claimed invention, a method is provided of unpacking objects built using build material in an additive manufacturing process, the method comprising: receiving built objects and non-fused build material on a surface facing an unpacking compartment of the build material management apparatus; operating the material management apparatus to create suction in a collection hose coupled to a recovered build material tank; operating the collection hose within the unpacking compartment to recover by suction non-fused build material from around built objects.

In an example not according to the claimed invention, the method comprises cleaning the built parts using one or more built part cleaning tools attached to the collection hose positioned proximate a suction opening of the hose.

Figure 2A schematically illustrates an internal circuit diagram 200 of one example of a build material management system in the form of a material management station 106. The material management station 106 can be used in conjunction with the trolley 102 of Figure 1A.

As previously described, printed parts along with unfused build material can be transported from the 3D printer 104 to the material management station 106 via the trolley 102. The material management station 106 can then be used to process build material and printed parts from the trolley 102.

In another example, printed parts along with unfused build material can be transported from the 3D printer 104 to the material management station 106 via another suitable container, e.g. a box or cartridge (not shown) instead of the trolley 102. The material management station 106 may then be used to process the powder-based material and printed parts from the container.

The material management station circuit 200 includes a conduit (or guide-channel) network and a pump 204 to provide a pressure differential across the conduit network to transport unfused build material between different components, as described below with reference to Figure 2A. In this example, the pump 204 is a suction pump which operates to create a pressure differential across the suction pump to produce air flow from an air inlet at substantially atmospheric pressure through the conduit network towards an upstream side of the suction pump (at a pressure below atmospheric pressure or at "negative pressure"). The pump 204 may be provided as an integral part of the material management station 106 in one example, but in another example, the material management station 106 provides a negative/reduced pressure interface, via which a suction pump may be detachably coupled or coupled in a fixed configuration. Although the description below refers to first conduit, second conduit, third conduit, etc. of the conduit network, there is no implied ordering in the number of the conduits other than to distinguish one conduit from another.

A collection hose 206 is connected to a recovered build material tank (RBMT) 208 via a working area port in a working area 203 in the form of a working area inlet port 273 and a first conduit (hose-to-RBMT conduit) 272 of the conduit network. The recovered build material tank 208 includes a recovered build material tank (RBMT) inlet area comprising a recovered build material tank (RBMT) build material trap 218b and a recovered build material tank (RBMT) material outlet. The RBMT inlet area is where a fluidised flow of build material is received for storage in the recovered build material tank 208. The first conduit 272 provides a path between the working area inlet port 273 and the RBMT inlet area. The working area inlet port 273 is to receive build material from the collection hose 206 and is provided at an end of the first conduit 272 connected to the collection hose 206. In other examples, the RBMT inlet area may communicate directly with the working area 203 or the collection hose 206 without a first conduit 272 between.

The recovered build material tank 208 in this example is provided internally to the material management station 106. A hose-to-RBMT valve 242 is positioned along the first conduit 272 for opening and closing the path through the first conduit 272. The collection hose 206 extends from the working area inlet port 273 into the working area 203. The working area 203 includes at least a portion of the trolley 102 (or other container) and can be maintained at substantially atmospheric pressure. Build material from the trolley 102 can be collected by the collection hose 206 and transported to the recovered build material tank 208 through the first conduit 272. The recovered build material tank 208 can be used for storing any unfused build material from the trolley 102 that is suitable for being used again in a further 3D printing (additive manufacturing) process. In this way, the recovered build material tank 208 can be used as a buffer storage tank to temporarily store unfused build material prior to supplying the unfused build material for use in a further 3D printing (additive manufacturing) process.

A second conduit 274 (hose-to-overflow conduit) of the conduit network connects the collection hose 206 to an overflow tank 210. The overflow tank 210 includes an overflow inlet area and the second conduit 274 provides a path between the collection hose 206 and the overflow inlet area comprising, in this example, an overflow build material trap 218a (a filter). An overflow tank port in the form of an overflow tank outlet port 275 may also be provided at an end of the second conduit 274. The overflow tank 210 can be selectively sealed by an openable lid (not shown). In a sealed configuration, the overflow tank 210 is in fluid communication with one or more overflow inlet ports and overflow outlet ports of the conduit network. Furthermore, in the sealed configuration, the overflow tank 210 is not directly open to the atmosphere. Build material from the working area 203 can be transported through the second conduit 274 and overflow tank outlet port 275 into the overflow tank 210. A hose-to-overflow valve 244 is positioned along the second conduit 274 for opening and closing a path through the second conduit 274. Unfused build material from the trolley 102 (or other container) can be collected by the collection hose 206 and transported to the overflow tank 210 through the first conduit 272. The overflow tank 210 is an external tank that is removable and that can be used for storing excess recoverable (recyclable) build material when the recovered build material tank 208 is full. Alternatively, the overflow tank 210 can be used as a waste storage tank to store unfused build material from the trolley 102 that is not suitable for recycling. In a further alternative, the overflow tank 210 can be used as a purged build material storage tank to store unfused build material from the trolley 102 and from elsewhere in the material management station 106 when the material management station 106 is purged of unfused build material.

The pump 204 is connected via a third conduit (pump-to-RBMT conduit) 276 of the conduit network to the recovered build material tank 208. The third conduit 276 provides a path between the pump 204 and the RBMT inlet area. A RBMT-to-pump valve 246 is positioned along the third conduit 276 for opening and closing the path through the third conduit 276.

The pump 204 is also connected to the overflow tank 210 via a fourth conduit (pump-to-overflow conduit) 278 of the conduit network. The fourth conduit 278 provides a path between the pump 204 and the overflow inlet area. An overflow tank port in the form of an overflow tank vacuum port 279 may also be provided at an end of the fourth conduit 278. Fluid, e.g. air, can transmit through the overflow tank vacuum port 279 from the overflow inlet area towards the pump 204. An overflow-to-pump valve 248 is positioned along the fourth conduit 278 for opening and closing a path through the fourth conduit 278.

Unfused build material in the trolley 102 can be collected using the collection hose 206 and transported either to the recovered build material tank 208 or to the overflow tank 210, or both. The tank to be used at a given time can be selected by opening appropriate valves along the conduits of the circuit of Figure 2A.

The valves described herein with reference to Figure 2A may be controlled by a controller 295, which may be, for example a programmable logic controller forming a part of processing circuitry of the build material management station 106. The controller 295 may electronically open one or more valves to open one or more paths in respective conduits based on the material transport operation being performed. The controller 295 may also electronically close one or more valves to close one or more paths in respective conduits. The valves may be, for example, butterfly valves and may be actuated using compressed air. In another example, one or more valves may be opened and closed manually by a user.

The controller controls the general operation of the material management system 200. The controller may be a microprocessor-based controller that is coupled to a memory (not shown), for example via a communications bus (not shown). The memory stores machine executable instructions. The controller 295 may execute the instructions and hence control operation of the build material management system 200 in accordance with those instructions.

Figure 2B is a table schematically illustrating for each of a number of different build material source locations and build material destination locations, an appropriate valve configuration corresponding the valves as labelled in Figure 2A. A tick in an appropriate column of the table indicates that the corresponding valve is controlled to be open by the controller 295 for the particular build material transport operation. For example, when transporting build material from the recovered build material tank 208 to the mixing tank 212, the valves 256, 258 and 254 are set by the controller 295 to be open, whereas the valves 250, 244, 276, 248, 242, 262, 260, 252a and 252b are set to be closed. In alternative examples, some valves may be set to be open by simultaneity.

In an example, a recyclability indicator is determined by processing circuitry of the build material management station 106. The recyclability indicator can be indicative of whether the build material in the trolley 102 (or container) includes recyclable or recoverable material. When it is determined that the unfused build material in the trolley 102 is not recyclable or when the recovered build material tank 208 is full, the unfused build material can be transported to the overflow tank 210.

To transport the unfused build material from the trolley 102 (or container) to the overflow tank 210, the hose-to-overflow valve 244 in the second conduit 274 between the collection hose 206 and the overflow tank 210 and the overflow-to-pump valve 248 in the fourth conduit 278 between the pump 204 and the overflow tank 210 can be opened, e.g. electronically by the controller 295. When the pump is active, a differential pressure is provided from the pump to the collection hose 206. That is, a pressure at the pump 204 is lower than a pressure at the collection hose 206. The differential pressure enables build material from the trolley 102 (or container) to be transported to the overflow tank 210. Build material (and air) in proximity with an end of the collection hose 206 (at approximately atmospheric pressure) is transported from the collection hose 206, along the second conduit 274 and through the hose-to-overflow valve 244 to overflow tank 210. The overflow tank 210 is provided in the sealed configuration. At the overflow tank 210, build material separates from air flow and drops from the overflow inlet area into the overflow tank 210. Air (and any residual build material) continues along the fourth conduit 278 and through the overflow-to-pump valve 248 towards the pump 204, which is at a reduced pressure.

To help limit unfused build material traveling through the overflow inlet area of the overflow tank 210 into the fourth conduit 278 towards the pump 204, the overflow inlet area can include an overflow build material trap 218a (e.g. a powder trap). The overflow build material trap 218a is arranged to collect build material from the second conduit 274 and divert the build material (e.g. powder) into the overflow tank 210. Thus, the overflow build material trap 218a helps limit build material conveying past the overflow inlet area of the overflow tank 210 and entering the fourth conduit 278 via the overflow tank vacuum port 279 to travel towards the pump 204.

The overflow build material trap 218a may include a filter (e.g. a mesh), which collects build material transported from the overflow tank 210. Thus, the filter separates build material from air flow in the overflow inlet area. Holes in the filter are small enough to limit the passage of at least 95% of build material but allow relatively free flow of air through the filter. Holes in the filter may be small enough to limit the passage of at least 99% of build material, whilst still allowing relatively free flow of air through the filter. Build material collected by the filter may drop from the overflow inlet area into the overflow tank 210.

Recoverable unfused build material in the trolley 102 (or container) can be transported to the recovered build material tank 208 in a similar way. To transport the unfused build material from the trolley 102 to the recovered build material tank 208, the hose-to-RBMT valve 242 in the first conduit 272 between the collection hose 206 and the recovered build material tank 208 and the RBMT-to-pump valve 246 in the third conduit 276 between the pump 204 and the recovered build material tank 208 can be opened electronically by the controller 295 as described above. When the pump is active, a differential pressure is provided from the pump to the collection hose 206. That is, a pressure at the pump 204 is lower than a pressure at the collection hose 206. The differential pressure enables build material from the trolley 102 (or container) to be transported to the recovered build material tank 208. Build material (and air) in proximity with an end of the collection hose 206 (at approximately atmospheric pressure) is transported from the collection hose 206, along the first conduit 272 and through the hose-to-RBMT valve 242 to the recovered build material tank 208. At the recovered build material tank 208, build material separates from air flow and drops from the RBMT inlet area into the recovered build material tank 208. Air (and any residual build material) continues along the third conduit 276 and through the RBMT-to-pump valve 246 towards the pump 204, which is at reduced pressure relative to atmospheric pressure.

Each of the recovered build material tank 208, the overflow tank 210, and the mixing tank 212 has a build material trap 218b, 218a and 218c respectively. These build material traps 218a, 218b, 218c perform cyclonic filtration of an incoming fluidised flow of build material and air as schematically illustrated in Figure 2C. An inlet 296 of the build material trap 218 receives the fluidised flow of build material and the build material is pushed by a centrifugal force created by suction of the pump 204 to an outer wall 297 of the build material trap 218. In one example, the outer wall 297 of the build material trap 218 has a circular cross-section and the incoming build material migrates via a cyclonic action to the outer wall 297 of the build material trap 218 until the incoming air reaches an exit below, whereupon the build material particles drop down into a vacuum sealed recipient 299 in the build material trap 218. Thus the build material trap 218 separates a fluidised flow of build material into a powder component, which is deposited in the associated tank and an air component, which is sucked towards the pump 204 via an air outlet 298 in the build material trap 218 providing an interface to the pump 204. A filter (not shown) may be provided in the air outlet 298 of the build material trap 218 to reduce the likelihood of any remaining build material reaching the pump 204 in the separated air flow. The build material trap 218 provides efficient powder separation via its geometry that promotes formation of a cyclone within the build material trap in use. It offers transportation of build material in an air flow and storage of the powder in a tank, whilst diverting an air flow out of the tank towards the pump 204. The build material trap provides a filter to capture residual powder in an air flow emerging from the cyclone to limit it from reaching the pump 204. The build material trap 218 is one example of a build material filter having a function of separating an air from a build material flow at a corresponding tank inlet area. In other examples, the air flow is separated from the fluidised build material upon arrival at a destination tank using a filter other than a cyclonic filter. For example, a diffusion filter may be used.

Returning to Figure 2A, the RBMT inlet area of the recovered build material tank 208 may also include the RBMT build material trap 218b (e.g. a powder trap) or another type of RBMT build material filter to separate build material and air from an incoming fluidised flow of build material. The RBMT build material trap 218b operates in the same or a similar way as the overflow build material trap 218a in the overflow tank 210, to help collect and divert build material into the recovered build material tank 208 to help limit build material from traveling through the third conduit 276 towards the pump 204.

When collecting material from the trolley 102 via the collection hose 206, as described above, a user can move the end of the collection hose 206 around the working area 203 including the trolley 102 to collect as much build material from the trolley 102 as possible.

The recovered build material tank 208 is also connected via a fifth conduit (overflow-to-RBMT conduit) 280 of the conduit network. An overflow tank port in the form of an overflow tank inlet port 281 may also be provided at an end of the fifth conduit 280. Build material from the overflow tank 210 can be transported through the fifth conduit 280 and overflow tank inlet port 281 into the recovered build material tank 208.

The fifth conduit 280 between the recovered material tank 208 and the overflow tank inlet port 281 includes an overflow-to-RBMT valve 250 in the path leading to the RBMT build material trap. In the event that the recovered build material tank 208 needs to be refilled with recovered build material, the overflow-to-RBMT valve 250 in the fifth conduit 280 between the recovered build material tank 208 and the overflow tank 210 can be opened, along with the RBMT-to-pump valve 246 in the third conduit 276 between the recovered build material tank 208 and the pump 204. Each of the valves can be opened electronically by the controller 295, as described above. When the pump is active, a differential pressure is provided from the pump to the overflow tank 210. That is, a pressure at the pump 204 is lower than a pressure at the overflow tank 210. In this example, the overflow tank 210 is provided in an unsealed configuration and includes an air inlet (not shown) open to atmosphere to maintain approximately atmospheric pressure within the overflow tank 210. The differential pressure enables build material from the overflow tank 210 to be transported to the recovered build material tank 208. Air flows into the overflow tank 210 through the air inlet. Build material (and air) in the overflow tank is transported from the overflow tank 210, along the fifth conduit 280 and through the overflow-to-RBMT valve 250 to the recovered build material tank 208. At the recovered build material tank 208, build material separates from air flow and drops from the RBMT inlet area into the recovered build material tank 208. Air (and any residual build material) continues along the third conduit 276 and through the RBMT-to-pump valve 246 towards the pump 204, which is at a reduced pressure.

The material management station circuit 200 also includes a mixing tank 212. The mixing tank 212 can be used to mix recovered build material from the recovered build material tank 208 with fresh build material from a fresh build material supply tank 214a or 214b, ready to be used in a 3D printing process.

Although two fresh build material supply tanks 214a, 214b are shown in this example, in other examples, one or more fresh build material supply tanks 214a, 214b may be used. More fresh build material supply tanks 214a, 214b may be used when appropriate.

Each fresh build material supply tank 214a, 214b is connected to the mixing tank 212 via a sixth conduit (a fresh build material conduit) 282 of the conduit network and a fresh build material supply tank port 283a, 283b. The fresh build material supply tank port 283a, 283b is to output build material from the respective fresh build material supply tank 214a, 214b. Each fresh build material supply tank 214a, 214b has an associated material supply tank cartridge-to-mixer valve 252a, 252b in the sixth conduit 282 between the respective fresh build material supply tank 214a, 214b and the mixing tank 212. Each fresh build material supply tank 214a, 214b also includes an air inlet valve whereby to ensure air can enter the fresh build material supply tanks 214a, 214b to maintain air pressure within the fresh build material supply tanks 214a, 214b at approximately atmospheric pressure.

The mixing tank 212 is connected via a seventh conduit (pump-to-mixer conduit) 284 of the conduit network to the pump 204. The seventh conduit 284 between the mixing tank 212 and the pump 204 includes a mixer-to-pump valve 254, which may be opened or closed to open and close the passage through the seventh conduit 284.

To transport fresh build material from the fresh build material supply tank 214a or 214b to the mixing tank 212, the material supply tank cartridge-to-mixer valve 252a or 252b and the mixer-to-pump valve 254 in the seventh conduit 284 between the mixing tank 212 and the pump 204 are opened. Each of the valves can be opened electronically by the controller 295, as described above. When the pump 204 is active, a differential pressure is provided from the pump 204 to the fresh build material supply tank 214a or 214b. That is, a pressure at the pump 204 is lower than a pressure at the fresh build material supply tank 214a or 214b. The differential pressure enables build material from the fresh build material supply tank 214a or 214b to be transported to the mixing tank 212. Build material (and air) in the fresh build material supply tank 214a or 214b is transported from the fresh build material supply tank 214a or 214b, along the sixth conduit 282 and through the cartridge-to-mixer valve 252a or 252b to the mixing tank 212. At the mixing tank 212, build material separates from air flow and drops from the mixer inlet area into the mixing tank 212. Air (and any residual build material) continues along the seventh conduit 284 and through the mixer-to-pump valve 254 towards the pump 204, which is at a reduced pressure.

The mixer inlet area of the mixing tank 212 can also include a mixer build material trap 218c (e.g. a powder trap) or any type of mixer build material filter to separate an air flow from a build material flow, which operates in the same or similar manner to as the overflow build material trap 218a and the RBMT build material trap 218b. The mixer build material trap 218c helps to collect and divert build material into the mixing tank 212, and help limit the build material from travelling through the seventh conduit 284 towards the pump 204.

The mixing tank 212 is also connected to the recovered build material tank 208 via an eighth conduit (RBMT-to-mixer conduit) 286 of the conduit network and a ninth conduit 288 of the conduit network extending sequentially from the recovered build material tank 208 to the mixing tank 212. The ninth conduit 288 may be part of the RBMT-to-mixer conduit 286.

A sieve 216 may, in some examples, be located in the RBMT to mixer conduit 286 or between the eighth and ninth conduits 286 and 288 between the recovered build material tank 208 and the mixing tank 212. The sieve 216 may be used to separate agglomerates and larger parts of material from the recycled or recovered build material that is transported from the recovered build material tank 208. Often, agglomerates and larger parts of material are not suitable for recycling in a further 3D printing process, so the sieve may be used to remove these parts from the build material. The sieve 216 includes an air inlet (not shown) to ensure air can enter the sieve 216 to maintain air pressure within the sieve 216 at approximately atmospheric pressure. In some examples, the RBMT-to-mixer conduit 286 may not be connected to a build material outlet of the recovered build material tank 208. In other examples a conduit connecting an outlet of the recovered build material tank 208 to a build material inlet in the mixer build material trap 218c of the mixing tank 212 may form a closed circuit.

A RBMT-to-sieve valve 256 is located in the eighth conduit 286 between the recovered build material tank 208 and the sieve 216, and a sieve-to-mixer valve 258 is located in the ninth conduit 288 between the sieve 216 and the mixing tank 212. The RBMT-to-sieve valve 256 and sieve-to-mixer valve 258 may be opened or closed to open and close the passages through the eighth and ninth conduits 286, 288 between the recovered build material tank 208 and the mixing tank 212. The valves may be opened or closed electronically by the controller 295.

To transport build material from the recovered build material tank 208 to the mixing tank 212 both the RBMT-to-sieve valve 256 and the sieve-to-mixer valve 258 in the eighth and ninth conduits 286, 288 between the recovered build material tank 208 and the mixing tank 212 can be opened as well as the mixer-to-pump valve 254 in the seventh conduit 284 that connects the mixing tank 212 to the pump 204. Build material in the recovered build material tank 208 may drop down into the sieve 216 through the eighth conduit 286 by gravity, for example. When the pump 204 is active, a differential pressure is provided from the pump 204 to the sieve 216. That is, a pressure at the pump 204 is lower than a pressure at the sieve 216. The differential pressure enables build material from the recovered build material tank 208 to be transported to the sieve 216 by gravity and to the mixing tank 212 by suction. Build material in the recovered build material tank 208 is transported through the RBMT material outlet, along the eighth conduit 286 and through the RBMT-to-sieve valve 256 to the sieve 216. Build material (and air) in the sieve 216 is transported from the sieve 216, along the ninth conduit 288 and through the sieve-to-mixer valve 258 to the mixing tank 212. At the mixing tank 212, build material separates from air flow and drops from the mixer inlet area into the mixing tank 212. Air (and any residual build material) continues along the seventh conduit 284 and through the mixer-to-pump valve 254 towards the pump 204, which is at a reduced (negative) pressure.

A currently selected ratio of recycled build material from the recovered build material tank 208 and fresh build material from the fresh build material supply tank 214a or 214b can be transported to the mixing tank 212 as described above. The ratio of fresh build material to recovered build material may be any selected ratio. The ratio may depend on the type of build material and/or the type of additive manufacturing process. In a selective laser sintering process the ratio could be, for example 50% fresh to 50% recovered build material. In one example of a printhead cartridge 3D printing process, the ratio may be 80% recovered to 20% fresh build material. For some build materials 100% fresh build material may be used, but for other build materials up to 100% recovered build material may be used. The fresh build material and the recovered build material can be mixed together within the mixing tank 212 using, for example, a rotating mixing blade 213.

Once the fresh build material and the recovered build material are sufficiently mixed, the mixed build material can be transported from the mixing tank 212 through a mixer-to-trolley valve 260, a tenth conduit (mixer-to-trolley conduit) 290 of the conduit network, a working area port in the form of a working area outlet port 291, to the working area 203 and into the trolley 102. Build material from the mixing tank 212 can pass through the working area outlet port 291 into the working area 203. The trolley 102 (or container) can be located substantially beneath the mixing tank 212 so that gravity can aid the transport of mixed build material from the mixing tank 212, through the mixer-to-trolley valve 260, the tenth conduit 290, the working area outlet port 291 and the working area 203 to the trolley 102.

Once the trolley 102 is filled with enough build material for a given 3D print run, the trolley 102 can be returned to the 3D printer 104. An appropriate quantity of build material to fill the trolley 102 for a print job may be controlled by the controller 295 of the material management station 106 based on the material management station 106 sensing how much build material is in the trolley when the trolley is docked in the material management station 106 at the beginning of a trolley fill workflow. The controller may then fill the trolley with a particular quantity (dose) of build material requested by a user for a particular print job intended by the user. The dosing is achieved by using a fill level sensor (not shown) such as a load cell in the mixing tank 212 to output a fill level value indicative of an amount of non-fused build material in the mixing tank. The fill level sensor can be one or more load cells, or any other type of sensor such as a laser-based sensor, a microwave sensor, a radar, a sonar, a capacitive sensor, etc.,. When the fill level sensor is a load cell, the fill level value can be an electrical signal indicative of a mass of the non-fused build material in the storage container.

A number of different workflows may be implemented in the material management station 106. These workflows are managed by the user, but some level of automation may be provided by a data processor on the material management station 106. For example, the user may select a workflow from a digital display on the material management station 106. For users having one material management station 106 and one printer 104 an example workflow cycle may be filling the trolley 102, followed by printing a 3D object, followed by unpacking the object from a build volume in the material management station 106 followed by a subsequent print operation and a corresponding unpacking of the build volume and so on. However, the material management station 106 may serve two or more printers so that successive unpacking and trolley filling operations may be performed by the material management station 106. The user may also choose to perform the trolley filling, printing and unpacking functions in a random order.

For each of the workflow operations, a user interface of the material management station 106 may guide the user to undertake particular manual operations that may be performed as part of the workflow operation. For example, to perform an unpack operation, the user interface may instruct the user to move the collection hose 206 around the collection area 203 as described previously. In addition, the material management station 106 can automatically initiate other functions of the workflow operation. For example, to perform the unpack operation, the material management station 106 can automatically operate the pump 204 whilst the user moves the collection hose 206 around the collection area 203 to recover build material from the trolley 102. Any workflow operations the material management station 106 can perform fully automatically may be signalled to the user through the user interface without requiring user confirmation to proceed. If the workflow operation could present a potential safety risk, the otherwise fully automatic workflow operation may require user confirmation to proceed.

For example, to load the trolley 102 with build material, the user sets this workflow operation then the material management station 106 automatically launches the different operations required sequentially. The material management station 106 is controlled to send build material from the recovered build material tank 208 to the mixing tank 212. The material management station 106 is further controlled to send fresh build material from at least one of the fresh build material supply tanks 214a, 214b to the mixing tank 212. The material management station 106 is subsequently controlled to blend the mixture in the mixing tank 212. The mixed build material in the mixing tank 212 can then be discharged to the trolley 102. In an example, this workflow operation is completed as a batch process, and so the cycle may be continuously repeated to completely fill the trolley 102.

In some processes, a small portion (e.g. 1%) of build material can pass through the build material traps 218a, 218b, 218c (e.g. the powder traps) and can travel towards the pump 204.

An additional RBMT build material trap 220 (e.g. a powder trap) may, in some examples, be located in an eleventh conduit (pump feed conduit) 292 of the conduit network that connects each of the third, fourth and seventh conduits 276, 278 and 284 to the pump 204. The additional RBMT build material trap 220 is connected to the RBMT inlet area. The additional RBMT build material trap 220 collects build material that may have passed through any of the overflow build material trap 218a, RBMT build material trap 218b or mixer build material trap 218c to help limit it from reaching the pump 204. Build material collected in the additional RBMT build material trap 220 can be transported into the recovered build material tank 208 by opening a trap-to-RBMT valve 262. The trap-to-RBMT valve 262 may be opened electronically by the controller 295. The RBMT build material trap 220 may operate in the same or similar way to each of the overflow, RBMT, and mixer build material traps 218a, 218b and 218c. Build material can be transported from the RBMT build material trap 220 to the recovered build material tank 208 by gravity.

A pump filter 222 may also be located in a twelfth conduit 294 of the conduit network adjacent the pump 204. This pump filter 222 helps to collect any build material that may have passed through any of the overflow build material trap 218a, RBMT build material trap 218b or mixer build material trap 218c as well as the additional RBMT build material trap 220. This helps limit the build material from reaching the pump 204, thereby reducing the likelihood of the function of the pump 204 being impaired, which could happen if large quantities of build material were to reach it. A compartment airflow pump (not shown) is according to the claimed invention coupled through a dust filter (not shown) and a conduit (not shown) to open into the unpacking compartment to create an airflow through the unpacking compartment and the dust filter. The compartment airflow pump and inlet into the conduit may create a laminar airflow through the unpacking compartment to contain powder in the apparatus. This may facilitate maintaining the cleanliness of the user, of the working area, and the build parts, by collecting powder and dust that may have become airborne in the unpacking chamber.

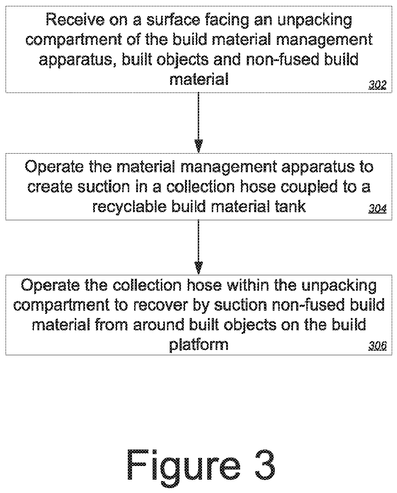

An example method not according to the claimed invention of unpacking objects built in an additive manufacturing process will now be described with reference to Figure 3.

In 302, a trolley 102 supporting a build platform 122 is docked into the docking port of material management station 106 such that the build platform 122 faces an unpacking compartment of the material management station 106.

In 304, the material management station 106 is operated to create suction in the collection hose 144 coupled to a recovered build material tank, by activating the suction pump 204.

In 306, the user operates the collection hose 144 within the unpacking compartment to recover by suction non-fused build material from around built objects on the build platform 144. The user may also the user operate the collection hose 144 to clean the built parts using one or more built part cleaning tools attached to the collection hose positioned proximate a suction opening of the hose. The user may also the user operate the collection hose 144 to clean the build platform of the trolley.

In the example where the build material is a powder-based build material, the term powder-based materials is intended to encompass both dry and wet powder-based materials, particulate materials and granular materials.

It should be understood that the examples described herein are not limited to powder-based materials, and may be used, with suitable modification if appropriate, with other suitable build materials. In other examples, the build material may be a paste or a gel, or any other suitable form of build material, for instance.

The reader's attention is directed to all papers and documents which are filed concurrently with or previous to this specification in connection with this application and which are open to public inspection with this specification.

## Claims

1. An apparatus (106) for unpacking objects built using build material in an additive manufacturing process, the apparatus (106) comprising:
an unpacking compartment (203);
a collection hose (206) to operate within the unpacking compartment (203) to recover by suction non-fused build material from around built objects;
a recovered build material tank (208) coupled to the collection hose (206) to receive non-fused build material recovered by the collection hose (206);
a housing defining the unpacking compartment (203) to be at least partially open to permit user access to a work area of the unpacking compartment (203) to operate the collection hose (206); and
a dust filter and a compartment airflow pump to create a laminar airflow across the work area from air outside the work area towards the work area and through the dust filter to contain powder in the apparatus;
the apparatus (106) to provision recovered non-fused build material from the recovered build material tank (208) for an additive manufacturing process.

2. The apparatus (206) as claimed in claim 1, comprising an overflow tank (210) coupleable to the collection hose (206) to receive non-fused build material recovered by the collection hose.

3. The apparatus (106) as claimed in claim 2, comprising switching valves to selectively enable fluid communication from the collection hose (206) to the recovered build material tank (208) and to the overflow tank (210).

4. The apparatus (106) as claimed in claim 1, comprising a conduit (272) to couple the collection hose (206) to the recovered build material tank (208).

5. The apparatus (106) as claimed in claim 1, comprising a suction pump (204) to create suction in the collection hose (206).

6. The apparatus (106) as claimed in claim 1, comprising one or more built part cleaning tools to attach to the collection hose (206) positioned proximate a suction opening of the hose.

7. The apparatus (106) as claimed in claim 1, comprising a trolley dock to receive a trolley used in an additive manufacturing process and comprising a build platform (122) on which portions of build material are fused in the additive manufacturing process, the trolley dock being to locate the build platform (122) facing the unpacking compartment in use.

8. The apparatus (106) as claimed in claim 7, wherein the collection hose (206) is to operate within the unpacking compartment (203) to recover by suction non-fused build material from around built objects on the build platform (122).

9. The apparatus (106) as claimed in claim 1, comprising an unpacking platform facing the unpacking compartment (203) in use to receive built objects and non-fused build material from a container, wherein the collection hose (206) is to operate within the unpacking compartment (208) to recover by suction non-fused build material from around built objects deposited on the unpacking platform from the container.

10. The apparatus (106) of claim 1 provided as a material management station separate from a 3D printer to perform the additive manufacturing process.

11. The apparatus (106) as claimed in claim 1, comprising a conduit to provide recycled non-fused build material from the recovered build material tank (208) to a trolley used in an additive manufacturing process for provision to a build platform supported by the trolley.

12. A method of unpacking objects built using build material in an additive manufacturing process, the method comprising:
receiving (302) built objects and non-fused build material on a surface facing an unpacking compartment (203) of the build material management apparatus (106) the unpacking compartment (203) comprised within a housing defining the unpacking compartment (203) to be at least partially open to permit user access to access a work area of the unpacking compartment (203) to operate a collection hose (206);
operating (304) the material management apparatus (106) to create suction in the collection hose (206) coupled to a recovered build material tank (208);
operating (306) the collection hose (206) within the unpacking compartment (203) to recover by suction non-fused build material from around built objects;
**characterized by**
operating a dust filter and a compartment airflow pump to create a laminar airflow across the work area from air outside the work area towards the work area and through the dust filter to contain powder in the apparatus.

13. A method as claimed in claim 12, comprising cleaning the built parts using one or more built part cleaning tools attached to the collection hose (206) positioned proximate a suction opening of the hose.

## Patentansprüche

1. Vorrichtung (106) zum Entpacken von Objekten, die unter Verwendung von Baumaterial in einem Additivfertigungsprozess gebaut werden, wobei die Vorrichtung (106) umfasst:
ein Entpackungsfach (203);
einen Sammelschlauch (206) dazu, innerhalb des Entpackungsfachs (203) dazu zu arbeiten, nicht verschmolzenes Baumaterial von um gebauten Objekten herum durch Saugung zurückzugewinnen;
einen Tank eines zurückgewonnenen Baumaterials (208), der mit dem Sammelschlauch (206) gekoppelt ist, dazu, nicht verschmolzenes Baumaterial, das durch den Sammelschlauch (206) zurückgewonnen wird, aufzunehmen;
ein Gehäuse, das das Entpackungsfach (203) definiert, dazu, mindestens teilweise dazu offen zu sein, einen Benutzerzugriff auf einen Arbeitsbereich des Entpackungsfachs (203) dazu zu erlauben, den Sammelschlauch (206) zu betreiben; und
einen Staubfilter und eine Fachluftströmungspumpe dazu, eine laminare Luftströmung über den Arbeitsbereich von Luft außerhalb des Arbeitsbereichs in Richtung des Arbeitsbereichs und den Staubfilter hindurch dazu zu erzeugen, ein Pulver in der Vorrichtung zu fassen;
wobei die Vorrichtung (106) zurückgewonnenes nicht verschmolzenes Baumaterial von dem zurückgewonnenen Baumaterialtank (208) für einen Additivfertigungsprozess zur Verfügung stellt.

2. Vorrichtung (206) nach Anspruch 1, die einen Überlauftank (210), der mit dem Sammelschlauch (206) koppelbar ist, dazu umfasst, nicht verschmolzenes Baumaterial aufzunehmen, das durch den Sammelschlauch zurückgewonnen wird.

3. Vorrichtung (106) nach Anspruch 2, die Schaltventile dazu umfasst, eine Fluidverbindung von dem Sammelschlauch (206) zu dem Tank eines zurückgewonnenen Baumaterials (208) und dem Überlaufbehälter (210) selektiv zu ermöglichen.

4. Vorrichtung (106) nach Anspruch 1, die eine Leitung (272) dazu umfasst, den Sammelschlauch (206) mit dem Tank eines zurückgewonnenen Baumaterials (208) zu koppeln.

5. Vorrichtung (106) nach Anspruch 1, die eine Saugpumpe (204) dazu umfasst, eine Saugung in dem Sammelschlauch (206) zu erzeugen.

6. Vorrichtung (106) nach Anspruch 1, die ein oder mehrere Reinigungswerkzeuge eines gebauten Teils dazu umfasst, sich an dem Sammelschlauch (206), der nahe einer Saugöffnung des Schlauchs positioniert ist, zu befestigen.

7. Vorrichtung (106) nach Anspruch 1, die ein Wagendock dazu umfasst, einen Wagen aufzunehmen, der in einem Additivfertigungsprozess verwendet wird, und eine Bauplattform (122) umfasst, an der Abschnitte von Baumaterial in dem Additivfertigungsprozess verschmolzen werden, wobei das Wagendock dazu dient, die Bauplattform (122), die dem Entpackungsfach bei Verwendung zugewandt ist, anzuordnen.

8. Vorrichtung (106) nach Anspruch 7,
wobei der Sammelschlauch (206) dazu dient, innerhalb des Entpackungsfachs (203) dazu zu arbeiten, nicht verschmolzenes Baumaterial von um gebauten Objekten herum auf der Bauplattform (122) durch Saugung zurückzugewinnen.

9. Vorrichtung (106) nach Anspruch 1, die eine Entpackungsplattform, die dem Entpackungsfach (203) bei Verwendung zugewandt ist, dazu umfasst, gebaute Objekte und nicht verschmolzenes Baumaterial von einem Behälter aufzunehmen, wobei der Sammelschlauch (206) dazu dient, innerhalb des Entpackungsfachs (208) dazu zu arbeiten, nicht verschmolzenes Baumaterial von um gebauten Objekten herum, das auf der Entpackungsplattform von dem Behälter abgeschieden wird, durch Saugung zurückzugewinnen.

10. Vorrichtung (106) nach Anspruch 1, die als eine Materialverwaltungsstation, die von einem 3D-Drucker getrennt ist, dazu bereitgestellt ist, den Additivfertigungsprozess durchzuführen.

11. Vorrichtung (106) nach Anspruch 1, die eine Leitung dazu umfasst, recyceltes nicht verschmolzenes Baumaterial von dem Tank eines zurückgewonnenen Baumaterials (208) zu einem Wagen bereitzustellen, der in einem Additivfertigungsprozess für eine Zurverfügungstellung an einer Bauplattform, die durch den Wagen gestützt wird, verwendet wird.

12. Verfahren zum Entpacken von Objekten, die unter Verwendung von Baumaterial in einem Additivfertigungsprozess gebaut werden, wobei das Verfahren umfasst:
Aufnehmen (302) von gebauten Objekten und nicht verschmolzenem Baumaterial auf einer Oberfläche, die einem Entpackungsfach (203) der Baumaterialverwaltungsvorrichtung (106) zugewandt ist, wobei das Entpackungsfach (203), das in einem Gehäuse enthalten ist, das Entpackungsfach (203) dazu definiert, mindestens teilweise dazu offen zu sein, einen Benutzerzugriff dazu zu erlauben, auf einen Arbeitsbereich des Entpackungsfachs (203) dazu zuzugreifen, einen Sammelschlauch (206) zu betreiben; Betreiben (304) der Materialverwaltungsvorrichtung (106) dazu, eine Saugung in dem Sammelschlauch (206), der mit einem Tank eines zurückgewonnenen Baumaterials (208) gekoppelt ist, zu erzeugen;
Betreiben (306) des Sammelschlauchs (206) innerhalb des Entpackungsfachs (203) dazu, nicht verschmolzenes Baumaterial von um gebauten Objekten herum durch Saugung zurückzugewinnen;
**gekennzeichnet durch**
Betreiben eines Staubfilters und einer Fachluftströmungspumpe dazu, eine laminare Luftströmung über den Arbeitsbereich von Luft außerhalb des Arbeitsbereichs in Richtung des Arbeitsbereichs und den Staubfilter hindurch dazu zu erzeugen, ein Pulver in der Vorrichtung zu fassen.

13. Verfahren nach Anspruch 12, das ein Reinigen der gebauten Teile unter Verwendung eines Reinigungswerkzeugs eines gebauten Teils oder mehrerer Reinigungswerkzeuge eines gebauten Teils umfasst, die an dem Sammelschlauch (206), der nahe einer Saugöffnung des Schlauchs positioniert ist, angebracht sind.

## Revendications

1. Appareil (106) permettant de déballer des objets construits à l'aide d'un matériau de construction dans un processus de fabrication additive,
l'appareil (106) comprenant :
un compartiment de déballage (203) ;
un tuyau de collecte (206) pour fonctionner à l'intérieur du compartiment de déballage (203) pour récupérer par aspiration un matériau de construction non fusionné autour d'objets construits ;
un réservoir de matériau de construction récupéré (208) accouplé au tuyau de collecte (206) pour recevoir un matériau de construction non fusionné récupéré par le tuyau de collecte (206) ;
un boîtier définissant le compartiment de déballage (203) pour être au moins partiellement ouvert pour permettre à un utilisateur d'accéder à une zone de travail du compartiment de déballage (203) pour faire fonctionner le tuyau de collecte (206) ; et
un filtre à poussière et une pompe à flux d'air de compartiment pour créer un flux d'air laminaire à travers la zone de travail à partir de l'air à l'extérieur de la zone de travail vers la zone de travail et à travers le filtre à poussière pour contenir la poudre dans l'appareil ;
l'appareil (106) pour fournir un matériau de construction non fusionné récupéré à partir du réservoir de matériau de construction récupéré (208) pour un processus de fabrication additive.

2. Appareil (206) selon la revendication 1, comprenant un réservoir de trop-plein (210) pouvant être accouplé au tuyau de collecte (206) pour recevoir un matériau de construction non fusionné récupéré par le tuyau de collecte.

3. Appareil (106) selon la revendication 2, comprenant des valves de commutation pour permettre sélectivement une communication de fluide du tuyau de collecte (206) au réservoir de matériau de construction récupéré (208) et au réservoir de trop-plein (210).

4. Appareil (106) selon la revendication 1, comprenant un conduit (272) pour accoupler le tuyau de collecte (206) au réservoir de matériau de construction récupéré (208).

5. Appareil (106) selon la revendication 1, comprenant une pompe d'aspiration (204) pour créer une aspiration dans le tuyau de collecte (206).

6. Appareil (106) selon la revendication 1, comprenant un ou plusieurs outils de nettoyage de pièces construites à fixer au tuyau de collecte (206) positionné à proximité d'une ouverture d'aspiration du tuyau.

7. Appareil (106) selon la revendication 1, comprenant un socle de chariot pour recevoir un chariot utilisé dans un processus de fabrication additive et comprenant une plateforme de construction (122) sur laquelle des portions de matériau de construction sont fusionnées dans le processus de fabrication additive, le socle de chariot étant destiné à placer la plateforme de construction (122) face au compartiment de déballage en cours d'utilisation.

8. Appareil (106) selon la revendication 7,
dans lequel le tuyau de collecte (206) doit fonctionner à l'intérieur du compartiment de déballage (203) pour récupérer par aspiration un matériau de construction non fusionné autour d'objets construits sur la plateforme de construction (122).

9. Appareil (106) selon la revendication 1, comprenant une plateforme de déballage faisant face au compartiment de déballage (203) en cours d'utilisation pour recevoir des objets construits et un matériau de construction non fusionné à partir d'un récipient, dans lequel le tuyau de collecte (206) doit fonctionner à l'intérieur du compartiment de déballage (208) pour récupérer par aspiration un matériau de construction non fusionné autour d'objets construits déposés sur la plateforme de déballage depuis le récipient.

10. Appareil (106) selon la revendication 1, fourni en tant que station de gestion de matériau distincte d'une imprimante 3D pour effectuer le processus de fabrication additive.

11. Appareil (106) selon la revendication 1, comprenant un conduit pour fournir un matériau de construction non fusionné recyclé à partir du réservoir de matériau de construction récupéré (208) à un chariot utilisé dans un processus de fabrication additive pour fournir à une plateforme de construction supportée par le chariot.

12. Procédé de déballage d'objets construits à l'aide d'un matériau de construction dans un processus de fabrication additive, le procédé comprenant :
la réception (302) d'objets construits et d'un matériau de construction non fusionné sur une surface faisant face à un compartiment de déballage (203) de l'appareil de gestion de matériau de construction (106) le compartiment de déballage (203) étant compris à l'intérieur d'un boîtier définissant le compartiment de déballage (203) comme étant au moins partiellement ouvert pour permettre à l'utilisateur d'accéder à une zone de travail du compartiment de déballage (203) pour faire fonctionner un tuyau de collecte (206) ; le fait de faire fonctionner (304) l'appareil de gestion de matériau (106) pour créer une aspiration dans le tuyau de collecte (206) accouplé à un réservoir de matériau de construction récupéré (208) ;
le fait de faire fonctionner (306) le tuyau de collecte (206) à l'intérieur du compartiment de déballage (203) pour récupérer par aspiration un matériau de construction non fusionné autour d'objets construits ; **caractérisé par**
le fait de faire fonctionner un filtre à poussière et une pompe à flux d'air de compartiment pour créer un flux d'air laminaire à travers la zone de travail à partir de l'air à l'extérieur de la zone de travail vers la zone de travail et à travers le filtre à poussière pour contenir la poudre dans l'appareil.

13. Procédé selon la revendication 12, comprenant le nettoyage des pièces construites à l'aide d'un ou plusieurs outils de nettoyage de pièces construites fixés au tuyau de collecte (206) positionné à proximité d'une ouverture d'aspiration du tuyau.
